# EUROPÄISCHE PATENTANMELDUNG

(11) **EP 1 875 805 A1**
(43) Veröffentlichungstag der Anmeldung: **09.01.2008**
(21) Anmeldenummer: 07013215.4
(22) Anmeldetag: 05.07.2007
(51) Int. Cl.: A21C 9/04

(54) **Belegvorrichtung und Verfahren zur automatischen Verteilung von Zutaten auf einen Teigboden**

(30) Priorität: 06.07.2006 DE 102006031495
(71) Anmelder: Multipond Wägetechnik GmbH, 84478 Waldkraiburg (DE)
(72) Erfinder: Marchl, Alois, 84478 Waldkraiburg (DE)
(74) Vertreter: Feldmeier, Jürgen

(57) **Zusammenfassung**

Die Erfindung betrifft eine Belegvorrichtung und ein Verfahren zur automatischen Verteilung von Zutaten auf einem Teigboden, die bei einem automatisierten Vorgang eine gleichmäßige Verteilung der Zutaten gewährleisten.

Eine Vorrichtung zum Belegen eines Teigbodens wie ein Pizzaboden, Kuchenboden oder dergleichen mit Zutaten wie geriebenem/geraspelten Käse, Schinken, Wurst, Fleisch, Fisch, Gemüse etc. besitzt ein Trägerbauteil (100), das im Einsatz über dem Teigboden angeordnet ist. Das Trägerbauteil (100) weist einen mit einem öffenbaren Verschluss versehenen Formatbehälter (160), dazu geeignet, eine vorbestimmte Menge Zutaten aufzunehmen, sowie mindestens einen Rechen mit Zinken (124), der darauf angepasst ist, die Zutaten beim Herunterfallen entlang eines Zutatenpfades zu zerstreuen, auf.

## Beschreibung

Die Erfindung betrifft eine Belegvorrichtung, insbesondere eine Belegvorrichtung, die Zutaten auf einen Pizza-, Kuchenteigboden oder dergleichen gleichmäßig verteilt.

Um im Bereich der Herstellung von Fertigpizzen einen hohen Grad an Automatisierung zu erreichen, ist es erforderlich, dass auch der Arbeitsvorgang der Verteilung von Zutaten auf einem Teigboden automatisiert ist. Hierbei besteht insbesondere das Problem, dass eine gleichmäßige Verteilung der Zutaten auf dem Teigboden nicht immer zuverlässig erfolgt.

Der Erfindung liegt die Aufgabe zugrunde dieses Problem zu lösen. Insbesondere liegt ihr die Aufgabe zugrunde, eine Vorrichtung bereitzustellen, die ein gleichmäßiges Belegen in automatisierter Form von Teigböden mit Zutaten ermöglicht.

Diese Aufgabe wird durch eine Vorrichtung gemäß Anspruch 1 und ein Verfahren gemäß Anspruch 26 erfüllt. Weiter vorteilhafte Ausführungen sind Gegenstand der Unteransprüche.

Die Erfindung stellt eine Vorrichtung zum Belegen eines Teigbodens wie ein Pizzaboden, Kuchenboden oder dergleichen mit Zutaten wie geriebenen/geraspelten Käse, Schinken, Wurst, Fleisch, Fisch, Gemüse etc. bereit, die ein Trägerbauteil aufweist, das im Einsatz über dem Teigboden angeordnet ist, und einen Formatbehälter, der dazu geeignet ist, eine vorbestimmte Menge Zutaten aufzunehmen, und mindestens einen Rechen, der darauf angepasst ist, Zutaten gleichmäßig zu verteilen bzw. zu zerstreuen, beinhaltet.

Vorteilhafterweise weist die Erfindung einen Zutatenverteilungsschacht auf, der den mindestens einen Rechen beinhaltet, damit Anteile der Zutaten nicht an dem mindestens einen Rechen vorbei fallen.

Ein noch besseres Zerstreuergebnis der Zutaten kann jeweils dadurch erreicht werden, dass ein weiterer Rechen vorhanden ist, der so angeordnet ist, dass dessen Zinken senkrecht zu den Zinken des ersten Rechens liegen und sich die Zinken beider Rechen überlappen.

Eine weitere Verbesserung des Zerstreuergebnisses kann dadurch erreicht werden, dass weitere Rechen vorhanden sind, die den bisherigen Rechen gegenüber liegen, und deren Zinken mit den Zinken der gegenüber liegenden Rechen parallel liegen.

Um das Verteilergebnis weiter zu verbessern, ist es vorteilhaft, wenn ein oder mehrere der Rechen in einen Zutatenfallpfad entgegen der Fallrichtung einschwenken.

Um zu verhindern, dass Zutaten an den Rechen hängen bleiben, ist es vorteilhaft, wenn die Zinken eines oder mehrerer Rechen aus einem Zutatenfallpfad mit der Fallrichtung ausschwenken, wobei das Schwenken von mehreren Rechen vorteilhafterweise synchron erfolgt.

Um Zutatenschwund durch unerwünschtes Herabfallen der Zutaten über den Rand des Pizzabodens hinaus zu verringern, ist es jeweils vorteilhaft, einen auf dem Zutatenverteilungsschacht angebrachten Trichter und/oder eine Blende vorzusehen. Um dieses Ergebnis zu verbessern, ist die Blende als Senkblende auf den Teigboden absenkbar ausgebildet.

Zur gezielten Entleerung des Formatbehälters enthält dieser vorteilhafterweise eine oder zwei synchron betriebene Öffnungsklappen, deren Öffnungsgeschwindigkeit veränderbar ist. Für eine bessere Zutatenvorverteilung sind diese Öffnungsklappen in geschlossenem Zustand horizontal ausgerichtet.

Um unterschiedliche Orte anfahren zu können, insbesondere einem Teigboden auf einem sich kontinuierlich bewegenden Förderband folgen zu können, ist das Trägerbauteil vorteilhafterweise ein Schlitten, der auf einem Rahmen mit Schienen angeordnet ist und dort motorisiert vorteilhafterweise durch einen Zahnriemen verfahren wird.

Für eine automatische Verarbeitung vorteilhaft wird ein Förderband, das darauf angepasst ist einen Teigboden oder dergleichen zu bewegen, als Teil der Vorrichtung verwendet.

Zur schnellen automatisierten Verarbeitung wird vorteilhafterweise zum portionsweise Abwiegen der Zutaten eine Kombinationswaage verwendet.

Um das reibungslose Zusammenarbeiten der Bauteile zu unterstützen, wird vorteilhafterweise eine Steuerung verwendet, die jeweils eine Ansteuerung für Bandmotor, Schlittenmotor, mindestens ein Rechenmotor und/oder Magnetventile aufweist.

Erfindungsgemäß wird ein Verfahren vorgestellt, dass das Öffnen eines Formatbehälters zur Ausgabe von Zutaten, Einschwenken von mindestens einem Rechen in den Fallpfad der Zutaten und Ausschwenken des mindestens einen Rechens aus dem Fallpfad der Zutaten aufweist.

Das Ergebnis kann dadurch effizienter werden, dass vorteilhafterweise einer oder mehrere der folgenden Schritte vorher ausgeführt wird/werden, wie
Absenken einer Senkblende auf den Teigboden und Ausrichten des Teigboden durch die Senkblende,
Minimierung der Relativgeschwindigkeit zwischen Teigboden und Schlitten,
Erfassung des Teigboden durch einen Sensor,
Transport eines Teigbodens auf einem Förderband.

Eine höherer Automatisierungsgrad kann dadurch erreicht werden, dass als ein nachgeordnetes Verfahren einer oder beide Schritte aus
Anheben der Senkblende und
Zurückfahren des Schlittens an seine Ausgangsposition vorgesehen werden.

Die Erfindung wird im Folgenden anhand eines Ausführungsbeispiels unter Bezugnahme auf die Figuren erläutert.
- Figur 1: zeigt eine Schrägansicht einer Vorrichtung eines Ausführungsbeispiels der erfindungsgemäßen Belegvorrichtung.
- Figur 2: zeigt eine Schrägansicht eines Zuteilungsverteilungsschachtes und eines Formatbehälters eines Ausführungsbeispiels.
- Figur 3: zeigt eine Schrägansicht eines Zuteilungsverteilungsschachtes und eines Formatbehälters eines Ausführungsbeispiels.
- Figur 4: zeigt eine teilgeschnittene Seitenansicht eines Schlittens und eines Rahmens eines Ausführungsbeispiels.
- Figur 5: zeigt eine Frontansicht eines Schlittens eines Ausführungsbeispiels.
- Figur 6: zeigt eine Ansicht von unten eines Schlittens eines Ausführungsbeispiels.

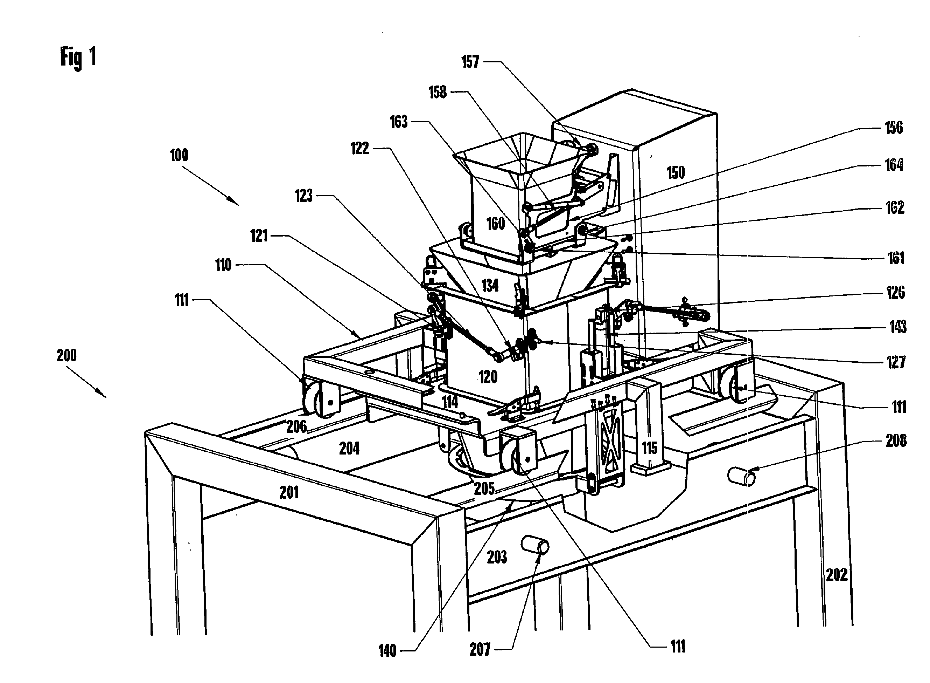

Wie in Figur 1 gezeigt ist, weist die erfindungsgemäße Vorrichtung einen Schlitten 100, einen Rahmen 200, eine Kombinationswaage (nicht gezeigt), ein Förderband (nicht gezeigt) und einen Steuerkasten (nicht gezeigt) auf.

Im Folgenden wird anhand der Figuren 1 bis 6 zunächst der Schlitten 100 der erfindungsgemäßen Vorrichtung beschrieben.

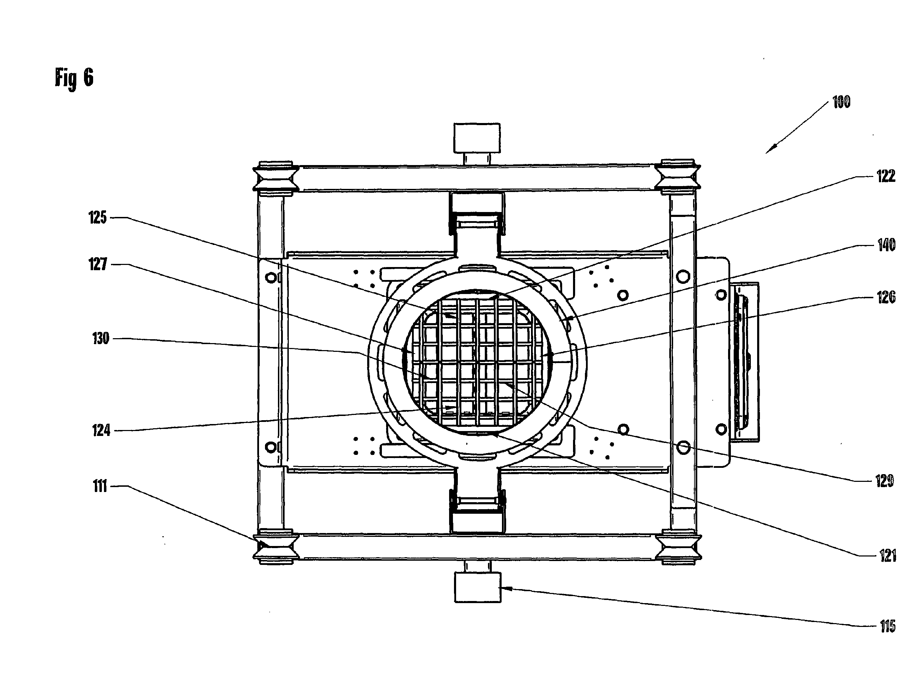

Gemäß Fig. 1 weist der Schlitten 100 einen rechteckigen Rahmen 110 auf, der waagerecht ausgerichtet ist. Über vier U-förmige Halterungen sind jeweils eine Rolle 111 an dem Rahmen angebracht. So kann sich der Schlitten 100 bezogen auf Figur 1 nach links und nach rechts bewegen (Richtungsangaben bezüglich der gesamten Vorrichtung, wie vorne, hinten, rechts und links werden im Folgenden bezogen auf die Fahrtrichtung des Schlittens 100 verwendet, wobei eine Bewegungsrichtung des Schlittens 100 nach links bezüglich Figur 1 als Fahrtrichtung oder "nach vorne" behandelt wird). In dem Schlittenrahmen 110 ist ein Boden 114 vorgesehen. Auf dem Boden 114 ist ein im Wesentlichen rechteckiger Zutatenverteilungsschacht 120 angeordnet, der vertikal ausgerichtet ist, den Boden 114 durchdringt, und unterhalb des Bodens 114 zu einer ungefähr kreisförmigen Form verjüngt (siehe Fig. 6). Zwei Achsen 121, 122 liegen parallel zur Fahrtrichtung des Schlitten 100 und durchdringen den Zutatenverteilungsschacht 120 nahe der rechten bzw. linken Seitenwand desselben. Die Achsen 121, 122 sind schwenkbar und über ein Gestänge 123 dergestalt miteinander verbunden, dass sie synchron mit entgegengesetzter Drehrichtung schwenken.

Wie aus Fig. 6 hervor geht, sind Zinken 124 und 125 jeweils an den Achsen 121 und 122 angebracht, so dass Zinken 124 und Achse 121 bzw. Zinken 125 und Achse 122 jeweils einen um die Achsen 121, 122 schwenkbaren Rechen bilden.

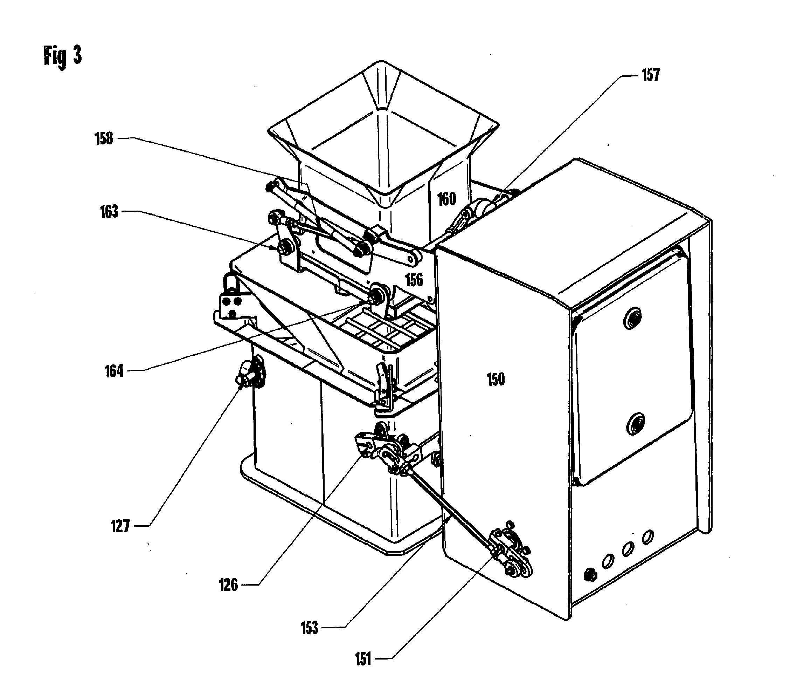

Des Weiteren sind in den Fign. 1 und 3 Achsen 126, 127, Gestänge 128 und in Fig. 6 Zinken 129, 130 ebenso angeordnet wie die vorbeschriebenen Achsen 121, 122, das Gestänge 123 und die Zinken 124, 125, und unterscheiden sich nur dadurch, dass die Achsen 126, 127 senkrecht zur Fahrtrichtung des Schlitten 100 liegen und den Zutatenverteilungsschacht 120 nahe der hinteren bzw. vorderen Seitenwand desselben etwas oberhalb der Achsen 121, 122 durchdringen.

Wie beispielsweise aus Fig. 1 hervorgeht, ist an dem Zutatenverteilungsschacht 120 am oberen Ende ein rechteckiger Trichter 134 so angeordnet, dass von oben einfallende Zutaten auf das Zentrum des Zutatenverteilungsschachts 120 zentriert werden.

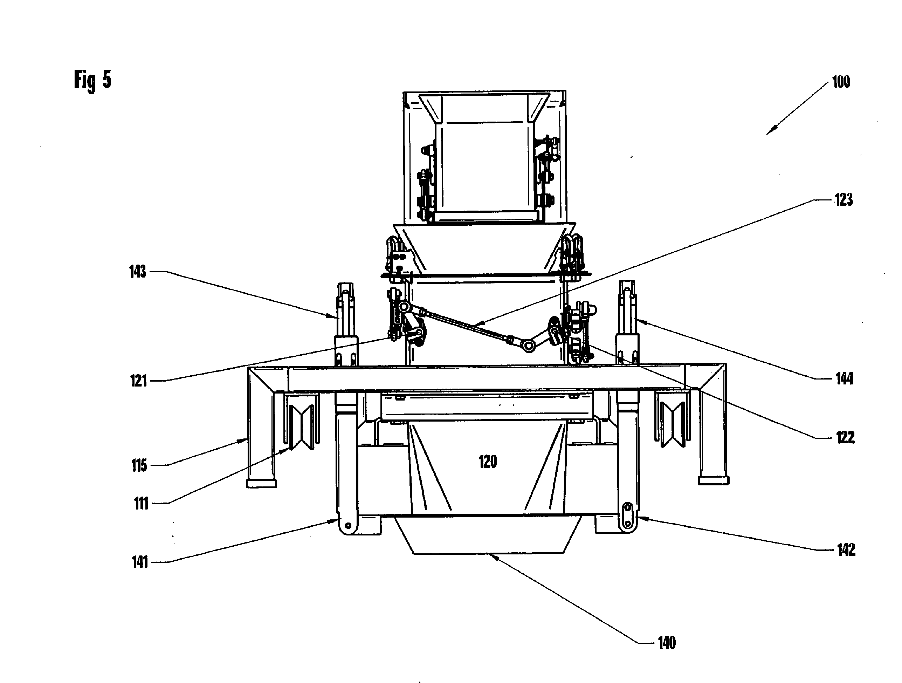

Das untere Ende des Zutatenverteilungsschachtes 120 wird von einer Senkblende 140 umschlossen (s. Fign. 5, 6), die im Wesentlichen die Form eines offenen Kegelstumpfs hat. Über Träger 141, 142 und pneumatische Zylinder 143, 144 ist die Senkblende 140 mit dem Schlittenrahmen 110 verbunden (s. Fig. 5). Über die pneumatischen Zylinder 143, 144 kann die Senkblende 140 vertikal bewegt werden.

Gemäß Fig. 1 ist auf dem Schlittenrahmen 110 ein Gehäuse 150 angeordnet.
Das Gehäuse beinhaltet Magnetventile (nicht gezeigt) zur Steuerung der Pneumatikzylinder 143, 144, 157, sowie einen Elektromotor (nicht gezeigt), dessen Welle 151 auf der linken Seite des Gehäuses 150 durch die Gehäusewand ragt und einen Elektromotor (nicht gezeigt), dessen Welle 152 durch die vordere Seitenwand des Gehäuses ragt.

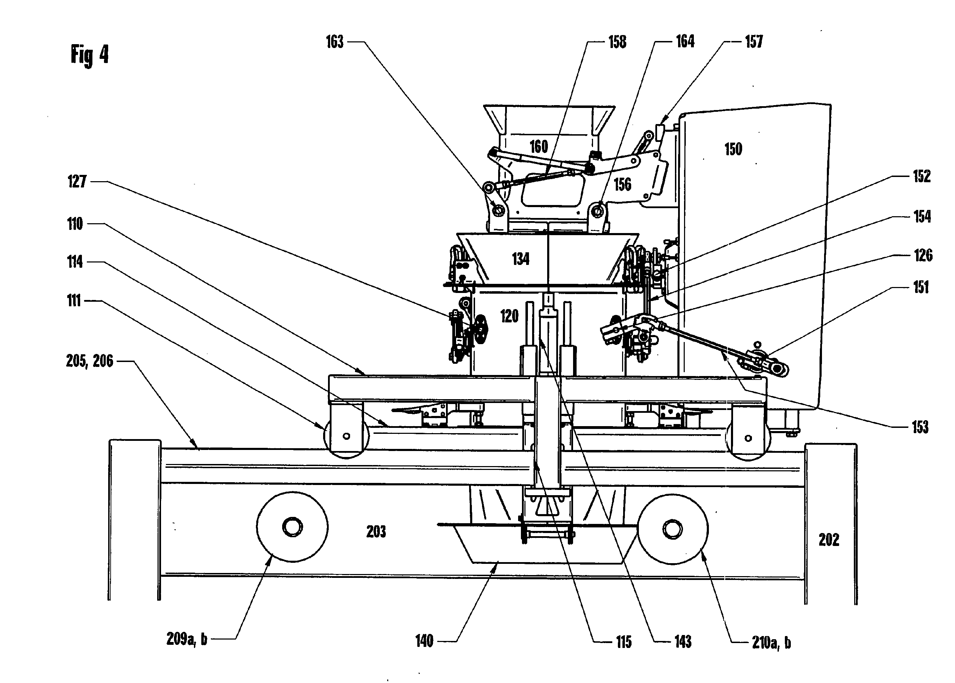

Über ein Gestänge 153 ist die Welle 151 mit der Achse 126 derart verbunden, dass eine Rotation der Welle 151 auf die Achse 126 übertragen wird (s. Fig. 3). Ebenso ist durch ein Gestänge 154 die Welle 152 so mit der Achse 122 verbunden, dass eine Rotation der Welle 152 auf die Achse 122 übertragen wird (s. Fig. 4).

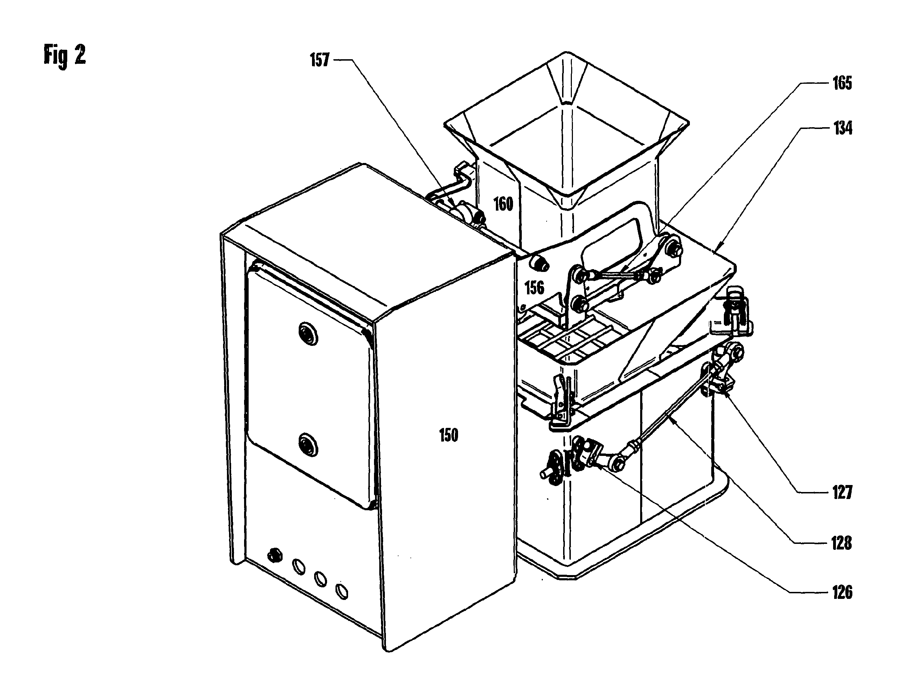

Wie beispielsweise in den Fign. 2 und 4 zu sehen ist, ist ein quaderförmiger Formatbehälter 160 über ein Gerüst 156 mit dem Gehäuse 150 verbunden und wird von diesem getragen. Der Formatbehälter 160 wird durch zwei Öffnungsklappen 161, 162 (s. Fig. 1) unten verschlossen, die um zwei Achsen 163, 164 schwenkbar gelagert sind. Die zwei Öffnungsklappen 161, 162 sind im geschlossenen Zustand horizontal ausgerichteten. Die Achsen 163, 164 sind über ein Gestänge 165 (s. Fig. 2) so miteinander verbunden, dass die Klappen synchron in entgegengesetzter Richtung rotieren. Ein Pneumatikzylinder 157 ist über ein Gestänge 158 so mit der Achse 163 verbunden, dass eine Ausfahrbewegung des Pneumatikzylinders 157 in eine Rotation der Achse 163 umgewandelt wird.

Im Folgenden wird der Rahmen 200 der Vorrichtung unter Bezugnahme auf die Fig. 1 und 4 beschrieben.

Der Rahmen 200 besteht aus zwei Trägern 201, 202, die aus Vierkantrohren aufgebaut sind und jeweils eine umgekehrte U-Form bilden. Die Träger 201, 202 sind über zwei Verbindungsträger 203, 204, die im Wesentlichen ein flaches U-Profil haben, verbunden. Des Weiteren sind die beiden Träger 201, 202 über zwei Schienen 205, 206 verbunden, die sich rechts und links in Fahrtrichtung in einem Abstand voneinander erstrecken, der dem Abstand der Rollen 111 des Schlittens 100 entspricht. Die Schienen 205, 206 bestehen jeweils aus einem hochkant gestellten Vierkantrohr. Auf diesen Schienen 205, 206 ist über seine Rollen 111 der Schlitten 100 aufgesetzt und so nach vorne und hinten bewegbar gelagert. Eine Achse 207 durchdringt und verbindet die Verbindungsträger 203, 204 nahe des Trägers 201. Die Achse 207 trägt jeweils eine Riemenscheibe 209a, 209b nahe der Verbindungsträger 203, 204. Eine Achse 208 durchdringt und verbindet die Verbindungsträger 203, 204 nahe des Trägers 202 und ist entsprechend mit Riemenscheiben 210a, 210b versehen. Die beiden Scheiben 209a, 209b der Achse 207 sind mit den beiden Scheiben 210a, 210b der Achse 208 jeweils über einen Zahnriemen (nicht gezeigt) verbunden. Über einen rechten und linken Arm 115 sind die Zahnriemen jeweils mit dem Schlittenrahmen 110 verbunden. Die Zahnriemen werden über einen nicht gezeigten Servomotor angetrieben.

Ein Förderband (nicht gezeigt) durchläuft den Rahmen 200 unter den Trägern 201, 202 von vorne nach hinten.

Ein Steuerkasten (nicht gezeigt) beinhaltet eine Steuerung jeweils für den Bandmotor, den Schlittenmotor, den beiden Rechenmotoren und den Magnetventilen für die Pneumatikzylinder 143, 144, 157.

Eine Kombinationswaage (nicht gezeigt) ist über dem Formatbehälter 160 angebracht und portioniert die Zutaten.

Im Folgenden wird nun ein Verfahren zum Belegen des Teigbodens mit Zutaten beschrieben. -

In der Ausgangsstellung befindet sich der Schlitten 100 nahe des Trägers 202. Die Zinken 124, 125, 129, 130 hängen entlang jeweils einer Seitenwand des Zutatenverteilschachtes 120 vertikal nach unten. Der Formatbehälter 160 ist durch die horizontal ausgerichteten Öffnungsklappen 161, 162 unten verschlossen und mit einer Portion Zutaten beladen, die zur Belegung eines einzelnen Teigbodens bestimmt ist.

Der Teigboden wird auf einem Förderband von einem Vorbackofen in einen Endbackofen transportiert. Dabei wird der Teigboden in seiner Bewegung von einem Sensor erfasst. Die Erfassung löst eine Bewegung des Schlittens 100 in Fahrtrichtung aus. Hierbei wird der Schlitten 100 über die Arme 115 und die Zahnriemen von dem Schlittenmotor bewegt. Die Geschwindigkeit des Schlittens 100 wird an die Geschwindigkeit des Bandes angeglichen, so dass sich der Schlitten 100 synchron über dem Teigboden bewegt.

Über Ausfahren der Pneumatikzylinder 143, 144 wird die Senkblende 140 auf den Teigboden abgesenkt, wodurch dieser exakt ausgerichtet wird.

Eine von der Kombinationswaage bereit gestellte Portion der Zutaten befindet sich im Formatbehälter 160. Durch ein Ausfahren des Pneumatikzylinders 157 wird über das Gestänge 158 die Klappe 161 um die Achse 163 geschwenkt. Gleichzeitig wird über das Gestänge 165 die Klappe 162 um die Achse 164 in entgegengesetzter Richtung geschwenkt. Durch das Schwenken der Klappen 161, 162 wird der Formatbehälter 160 geöffnet. Die sich in dem Formatbehälter 160 befindlichen Zutaten fallen aus dem Formatbehälter 160, werden durch den Trichter 134 zentriert und fallen in den Zutatenverteilungsschacht 120.

Gleichzeitig werden die Zinken 124, 125, 129, 130 der Rechen in die fallenden Zutaten entgegen der Fallrichtung eingeschwenkt. Dies geschieht dadurch, dass durch eine Rotation der Welle 151 über das Gestänge 153 die Achse 126 so rotiert wird, dass die Zinken 129, die zu Beginn entlang der Seitenwand des Zutatenverteilungszylinders 120 von der Achse 126 herabhingen, bis zu einer in etwa horizontalen Lage heraufgeschwenkt werden. Gleichzeitig wird über das Gestänge 128 die Rotation so auf die Achse 127 übertragen, dass deren Zinken 130, die zuvor entlang der Seitenwand des Zutatenverteilungsschachtes 120 von der Achse 127 herabhingen entgegen der Rotationsrichtung der Achse 126 ebenfalls nach oben in eine in etwa horizontale Lage schwenken. Zeitlich kurz versetzt erfolgt entsprechend durch eine Drehung der Welle 152 über die Gestänge 154, 123 eine Rotation der Achsen 122, wodurch die Zinken 124, 125 in eine horizontale Lage schwenken. Die Zinken 124, 125, 129, 130 bilden somit eine Art grobes Sieb. Beim Durchfallen durch diesen und durch die Einwirkung der Bewegung auf die Zutaten beim Einschwenken der Zinken werden die Zutaten gleichmäßig über den Durchmesser des Zutatenverteilungsschachts verteilt.

Gleich darauf werden die Zinken 124, 125, 129, 130 der Rechen mit der Fallrichtung wieder ausgeschwenkt, so dass an den Zinken verhakte Reste der Zutaten ebenfalls hinabfallen. Der Vorgang des Ausschwenkens erfolgt analog dem Vorgang des Einschwenkens in umgekehrter Reihenfolge mit umgekehrten Rotationsrichtungen.

Die Zutaten fallen weiter und werden durch die Senkblende 140 auf den Teigboden zentriert.

Nach Abschluss des Fallvorgangs der Zutaten wird die Senkblende 140 über die pneumatischen Zylinder 143, 144 wieder angehoben, der Schlitten 100 stoppt und fährt zu seiner Ausgangsposition zurück.

Während der Fahrt des Schlittens 100 wiegt die Kombinationswaage eine neue Portion der Zutaten für den nächsten Zyklus ab.

Der Vorgang wiederholt sich bei der Erfassung jedes weiteren Teigbodens durch den Sensor.

## Patentansprüche

1. Vorrichtung zum Belegen eines Teigbodens wie ein Pizzaboden, Kuchenboden oder dergleichen mit Zutaten wie geriebenem/geraspelten Käse, Schinken, Wurst, Fleisch, Fisch, Gemüse etc.
mit einem Trägerbauteil (100), im Einsatz über dem Teigboden angeordnet, das Trägerbauteil (100) aufweisend:
einen mit einem öffenbaren Verschluss versehenen Formatbehälter (160), dazu geeignet, eine vorbestimmte Menge Zutaten aufzunehmen, sowie
mindestens einen Rechen mit Zinken (124), der darauf angepasst ist, die Zutaten beim Herunterfallen entlang eines Zutatenpfades zu zerstreuen.

2. Vorrichtung gemäß dem vorherigen Anspruch, aufweisend einen Zutatenverteilungsschacht (120), der den mindestens einen Rechen beinhaltet.

3. Vorrichtung gemäß dem vorherigen Anspruch, wobei die Zinken (124) des mindestens einen Rechens im Wesentlichen horizontal in den Zutatenfallpfad ragen.

4. Vorrichtung gemäß dem vorherigen Anspruch, aufweisend einen weiteren Rechen, der so angeordnet ist, das dessen Zinken (129) im Wesentlichen senkrecht zu den Zinken (124) des mindestens einen Rechens liegen.

5. Vorrichtung gemäß dem vorhergehenden Anspruch, wobei sich die Zinken (129) des weiteren Rechens mit den Zinken (124) des mindestens einen Rechens überlappen.

6. Vorrichtung gemäß einem der vorhergehenden Ansprüche, aufweisend einen weiteren Rechen (125, 130) der in dem Zutatenverteilungsschacht dem mindestens einen Rechen gegenüber liegt.

7. Vorrichtung gemäß dem vorherigen Anspruch, wobei die Zinken (125, 130) des weiteren Rechens in dem Zutatenfallpfad parallel zu den Zinken (124, 129) des mindestens einen Rechens ausgerichtet sind.

8. Vorrichtung gemäß einem der vorhergehenden Ansprüche, wobei die Zinken (124, 125, 129, 130) einer vorbestimmten Anzahl der Rechen in den Zutatenfallpfad entgegen der Fallrichtung einschwenkbar angeordnet sind.

9. Vorrichtung gemäß einem der vorhergehenden Ansprüche, wobei die Zinken (124, 125, 129, 130) einer Anzahl der Rechen aus dem Zutatenfallpfad mit der Fallrichtung ausschwenkbar angeordnet sind.

10. Vorrichtung gemäß einem der vorhergehenden Ansprüche 4 bis 9, **gekennzeichnet durch** eine Schwenkvorrichtung (123, 128), mit der mindestens zwei Rechen synchron schwenkbar sind.

11. Vorrichtung gemäß den vorhergehenden Ansprüchen, wobei der Zutatenverteilungsschacht (120) einen Trichter (134) aufweist, der darauf angepasst ist, die Zutaten auf den Zutatenverteilungsschacht (120) zu zentrieren.

12. Vorrichtung gemäß einem der vorhergehenden Ansprüche, aufweisend eine Senkblende (140), die unterhalb des Zutatenverteilungsschachts (120) angeordnet ist und darauf angepasst ist, die Zutaten beim Herunterfallen auf den darunter angeordneten Teigboden zu zentrieren.

13. Vorrichtung gemäß dem vorherigen Anspruch, **gekennzeichnet durch** eine Absenkvorrichtung (141, 142, 143, 144), die dazu angepasst ist, die Senkblende (140) auf den Teigboden abzusenken.

14. Vorrichtung gemäß dem vorherigen Anspruch, wobei die Absenkvorrichtung mindestens ein Pneumatik-Zylinder (143, 144) ist.

15. Vorrichtung gemäß einem der vorhergehenden Ansprüche, wobei der Verschluss mindestens eine Öffnungsklappe (161) aufweist.

16. Vorrichtung gemäß dem vorherigen Anspruch, wobei der Verschluss eine weitere Öffnungsklappe (162) sowie einen Synchronmechanismus (165) aufweist, mittels dem die Öffnungsklappen (161, 162) synchron schwenkbar sind.

17. Vorrichtung gemäß einem der beiden vorhergehenden Ansprüche, wobei die Öffnungsklappe(n) (161, 162) in geschlossenem Zustand horizontal ausgerichtet ist/sind.

18. Vorrichtung gemäß einem der drei vorhergehenden Ansprüche, **gekennzeichnet durch** einen Öffnungsmechanismus, der dazu angepasst ist, dass die Öffnungsgeschwindigkeit der Öffnungsklappe(n) (161, 162) veränderbar ist.

19. Vorrichtung gemäß einem der vorhergehenden Ansprüche, wobei das Trägerbauteil ein Schlitten (100) ist.

20. Vorrichtung gemäß einem der vorhergehenden Ansprüche, aufweisend einen Rahmen (200) mit mindestens einer Schiene (205), die darauf angepasst ist, den Schlitten (100) zu tragen und/oder zu führen.

21. Vorrichtung gemäß einem der vorhergehenden Ansprüche, aufweisend einen Servomotor, der darauf angepasst ist, den Schlitten (100) zu verfahren.

22. Vorrichtung gemäß dem vorherigen Anspruch, aufweisend einen Zahnriemen, der darauf angepasst ist, eine Antriebskraft des Servomotors auf den Schlitten (100) zu übertragen.

23. Vorrichtung gemäß einem der vorhergehenden Ansprüche, aufweisend ein Förderband, das darauf angepasst ist, einen Teigboden oder dergleichen zu bewegen.

24. Vorrichtung gemäß einem der vorhergehenden Ansprüche, aufweisend eine Kombinationswaage zum portionsweise Abwiegen der Zutaten.

25. Vorrichtung gemäß einem der vorhergehenden Ansprüche, aufweisend eine Steuerung die jeweils eine Ansteuerung für Bandmotor, Schlittenmotor, mindestens einen Rechenmotor und/oder Magnetventile aufweist.

26. Verfahren zum Belegen eines Teigbodens mittels einer Vorrichtung gemäß einem der vorherigen Ansprüche, die Schritte, aufweisend:
Öffnen des Formatbehälters zum Ausgeben von Zutaten, wenn sich der Teigboden unter dem Formatbehälter befindet,
Einschwenken von mindestens einem Rechen in den Zutatenfallpfad,
Ausschwenken des mindestens einen Rechens aus dem Zutatenfallpfad.

27. Verfahren gemäß dem vorherigen Anspruch, wobei das Einschwenken von mindestens einem Rechen in den Zutatenfallpfad zur Zeit des Herabfallens der Zutaten erfolgt.

28. Verfahren gemäß einem der vorherigen beiden Ansprüche, als ein Vorverfahren vor den Schritten gemäß dem vorherigen Anspruch aufweisend:
Absenken der Senkblende auf den Teigboden,
Ausrichten des Teigboden durch die Senkblende.

29. Verfahren gemäß einem der vorherigen Verfahrensansprüche, das als einen vorgeordneten Schritt ein Minimieren der Relativgeschwindigkeit zwischen Teigboden und Schlitten aufweist.

30. Verfahren gemäß einem der vorherigen Verfahrensansprüche, das als einen vorgeordneten Schritt eine Erfassung des Teigbodens durch einen Sensor aufweist.

31. Verfahren gemäß einem der vorherigen Verfahrensansprüche das als einen vorgeordneten Schritt einen Transport eines Teigbodens auf einem Förderband aufweist.

32. Verfahren gemäß einem der vorherigen Verfahrensansprüche, das als einen nachgeordneten Schritt ein Anheben der Senkblende aufweist.

33. Verfahren gemäß einem der vorherigen Verfahrensansprüche, das als einen nachgeordneten Schritt ein Zurückfahren des Schlittens in seine Ausgangsposition aufweist.
